Europäisches Patentamt

European Patent Office

Office européen des brevets

(19)

(11) EP 0 523 447 B1

(12) **EUROPÄISCHE PATENTSCHRIFT**

(45) Veröffentlichungstag und Bekanntmachung des Hinweises auf die Patenterteilung:
**23.09.1998   Patentblatt 1998/39**

(51) Int Cl.$^6$: **C10J 3/46**

(21) Anmeldenummer: **92111106.8**

(22) Anmeldetag: **01.07.1992**

(54) **Verfahren und Verwendung eines Reaktors zur Vergasung von Abfällen**

Process and use of a reactor for gasifying wastes

Procédé et utilisation d'un réacteur pour gazéifier des déchets

(84) Benannte Vertragsstaaten:
**AT BE CH DE DK ES FR GB GR IT LI LU NL PT SE**

(30) Priorität: **17.07.1991   DE 4123740**

(43) Veröffentlichungstag der Anmeldung:
**20.01.1993   Patentblatt 1993/03**

(73) Patentinhaber: **OSCHATZ GMBH**
**45143 Essen (DE)**

(72) Erfinder:
• **Schrag, Hans-Jürgen, Dr.-Ing.**
  **W-4300 Essen 1 (DE)**
• **Golkowski, Gerhard, Dipl.-Ing.**
  **W-4156 Willich 2 (DE)**
• **Wensing, Helmut, Dipl.-Ing.**
  **W-4300 Essen 1 (DE)**

• **Wintrich, Franz, Dipl.-Ing.**
  **W-4300 Essen 13 (DE)**
• **Herbermann, Michael, Dr.-Ing.**
  **W-4390 Gladbeck (DE)**

(74) Vertreter: **Masch, Karl Gerhard, Dr. et al**
**Patentanwälte,**
**Andrejewski, Honke & Sozien,**
**Postfach 10 02 54**
**45002 Essen (DE)**

(56) Entgegenhaltungen:
**EP-A- 0 411 881         WO-A-84/03900**
**DE-A- 2 617 897         DE-B- 1 091 268**
**FR-A- 2 369 502         GB-A- 2 106 130**
**GB-A- 2 138 841         US-A- 2 971 830**

## Beschreibung

Die Erfindung betrifft ein Verfahren zum Vergasen von kohlenstoffhaltigen Materialien, wobei die kohlenstoffhaltigen Materialien mit einem Unterschuß an Luft und/oder Sauerstoff oder mit Wasserdampf sowie einem Unterschuß an Luft und/oder Sauerstoff bei einer Temperatur von 1000 bis 1800 °C und einem Druck von 1 bis 60 bar in einem Vergasungsreaktor, in dem eine für einen Zyklon charakteristische Drallströmung ausgebildet ist, zu einem Produktgas und einer im unteren Bereich des Vergasungsreaktors austretenden schmelzflüssigen Schlacke umgesetzt werden.

Die Vergasung ist ein in der chemischen Technologie in großem Umfang eingesetztes Verfahren zur Erzeugung eines Gemisches von Kohlenmonoxid und Wasserstoff, das als Synthesegas bezeichnet wird und zur Herstellung einer Reihe wichtiger Grundchemikalien verwendet wird, insbesondere zur Herstellung von Methanol. Zunächst diente als Einsatzmaterial Kohle, während zur Zeit im wesentlichen Rückstandsöle aus der Raffinerietechnologie eingesetzt werden. In jüngerer Zeit ist auch die Vergasung von Abfallmaterialien untersucht worden, wie beispielsweise die Vergasung eines Schlamms aus feinverteilter Kohle, Klärschlamm und Wasser, aber auch die Vergasung trockener, pulverförmiger Abfälle, wie beispielsweise von getrocknetem und gemahlenem Klärschlamm.

Die bisher für die Vergasung dieser Abfälle eingesetzten Reaktoren arbeiten nach dem sogenannten "entrained flow"-System, bei dem oben über eine Düse der Abfallschlamm eingedüst wird und in gleicher Richtung den Vergasungsmedien Sauerstoff bzw. Sauerstoff und Wasserdampf zugeführt werden. Ein weiterer Vergaser ist der sogenannte Flugstromvergaser, bei dem feinverteiltes trockenes Gut mit einem Trägergas in den Reaktor eingetragen wird. Im Falle des Vergasungsreaktors nach dem "entrained flow"-System muß der aufgeschlämmte Feststoff mit speziellen Düsen in feiner Verteilung in den Vergasungsmedien Wasserdampf und Sauerstoff bzw. Luft verteilt sein, um eine vollständige Umsetzung in der unterhalb der Düse befindlichen Vergasungszone zu erzielen. Ein weiterer Nachteil dieses Verfahrens besteht darin, daß die ausgemauerte Wandung ungeschützt der hohen thermischen Belastung und den Reaktionsprodukten ausgesetzt ist. Ein Nachteil des Flugstromvergasers liegt darin, daß ein sehr fein gemahlenes trockenes Gut mit einer relativ großen Menge an Trägergas in den Reaktor eingetragen werden muß, wobei das Trägergas auf die hohe Temperatur von 1400 bis 1600 °C erhitzt werden muß. Zusätzlich ist auch hier die Innenwandung des Reaktors der hohen Temperatur und den Reaktionsprodukten ausgesetzt.

Bei einem bekannten Verfahren der eingangs genannten Art (GB-A-2 106 130), von dem die Erfindung ausgeht, werden Kohle oder Biomasse, d.h. durch Photosynthese entstandene pflanzliche Zellmasse vergast. Im Vergasungsreaktor wird eine einfache schraubenlinienförmige Bewegung des umzusetzenden Gas/Partikelstromes ausgebildet; am unteren Ende wird das Produktgas durch ein den Vergasungsreaktor durchsetzendes Zentralrohr oben abgezogen, während die an der Reaktorwandung herablaufende schmelzflüssige Schlacke durch einen unteren Reaktortrichter ausläuft.

Der Erfindung liegt die Aufgabe zugrunde, anzugeben, wie man kohlenstoffhaltige Abfälle problemlos vergasen kann.

Die erfindungsgemäße Lösung dieser Aufgabe besteht darin, daß beim Zuführen von kohlenstoffhaltigen Abfällen zum Vergasungsreaktor in diesem eine hochturbolente Drallströmung mit innerer Rezirkulation ausgebildet wird.

Nach bevorzugter Ausführungsform werden die kohlenstoffhaltigen Abfälle bei einer Temperatur von 1200 bis 1700 °C bzw. bei einem Druck von 1 bis 40 bar, insbesondere 1 bis 10 bar umgesetzt.

Gegenstand der Erfindung ist auch die Verwendung eines senkrecht stehenden, zylindrischen Zyklonenreaktors bei dem beschriebenen Verfahren. Vorzugsweise wird das Produktgas seitlich im unteren Bereich des Zyklonenreaktors entnommen.

In **Figur 1** sind Strömungskomponenten im Reaktor dargestellt.

In **Figur 2** ist der Verlauf der Axialgeschwindigkeit in Abhängigkeit vom Reaktorradius dargestellt für heißes und kaltes Gas.

In **Figur 3** ist der Verlauf der Tangentialgeschwindigkeit in Abhängigkeit vom Reaktorradius für heißes und kaltes Gas dargestellt.

Das erfindungsgemäße Verfahren erlaubt, die Kohlenstoff enthaltenden Materialien in einer gröberen Form einzutragen als in den Flugstromvergaser, in dem die Partikelgröße unter einem Millimeter, im Falle von Kunststoffpulverabfällen unter 300 μ liegen muß. Hierzu im Gegensatz können die in den Zyklonvergaser einzutragenden Partikel mit einer Korngröße von ≥ 1 mm bis wenigstens 5 mm vorliegen. Selbstverständlich können auch kleinere Partikel eingesetzt werden. Durch die hohe Turbulenz im Reaktor wird ein sehr inniger Kontakt zwischen den Reaktanten herbeigeführt, verbunden mit hohen Reaktionsgeschwindigkeiten und einem hohen Stoffumsatz. Hierdurch wird ein wesentlich höherer Stoffdurchsatz ermöglicht als in den Reaktoren des Standes der Technik. Dieser hohe Stoffumsatz wird noch durch die Umsetzung von mit Sauerstoff angereicherter Luft bzw. mit Sauerstoff verstärkt. Ferner wird durch die turbulente Strömung erreicht, daß die Schlacke an den Innenwänden des Reaktors nach unten fließt und hierdurch einen wirksamen Schutz des Reaktormaterials gegenüber Temperatur und Reaktanten ermöglicht.

Die bevorzugte Vergasungstemperatur liegt bei 1200 bis 1700 °C. Der bevorzugte Druck liegt bei ≥ 1 bis 40 bar, besonders bevorzugt bei ≥ 1 bis 10 bar. Der Reaktor ist jedoch auch bei Normaldruck betreibbar. Die Zuführung der Einsatzmaterialien kann auf unterschiedliche Weise erfolgen. Es ist jedoch zu gewährleisten, daß sich zumindest ein Teil der im Reaktor befindlichen Stoffe in einer für eine Zyklonströmung charakteristischen Strömung befindet, da hierdurch eine turbulente und tangentiale Strömung erreicht wird. Die Einsatzmaterialien, insbesondere die Einsatzgase - nämlich Luft bzw. Sauerstoff bzw. Wasserdampf - sollten daher tangential seitlich in den Reaktor eingeführt werden, bevorzugt im oberen Bereich des Reaktors. Grundsätzlich kann die tangentiale Zuführung jedoch über die gesamte Höhe des Reaktors erfolgen. Auch die zu vergasenden Kohlenstoff enthaltenden Materialien werden zumindest teilweise tangential seitlich dem Reaktor zugeführt, die Zuführung kann jedoch auch von oben erfolgen, vorteilhafterweise im Bereich des Zuflusses der genannten Gase. Es sind auch Ausführungsformen möglich, in denen die genannten Gase und Kohlenstoff enthaltende Einsatzmaterialien an mehreren Stellen seitlich und tangential zugeführt werden oder teilweise tangential und teilweise in gerader Richtung.

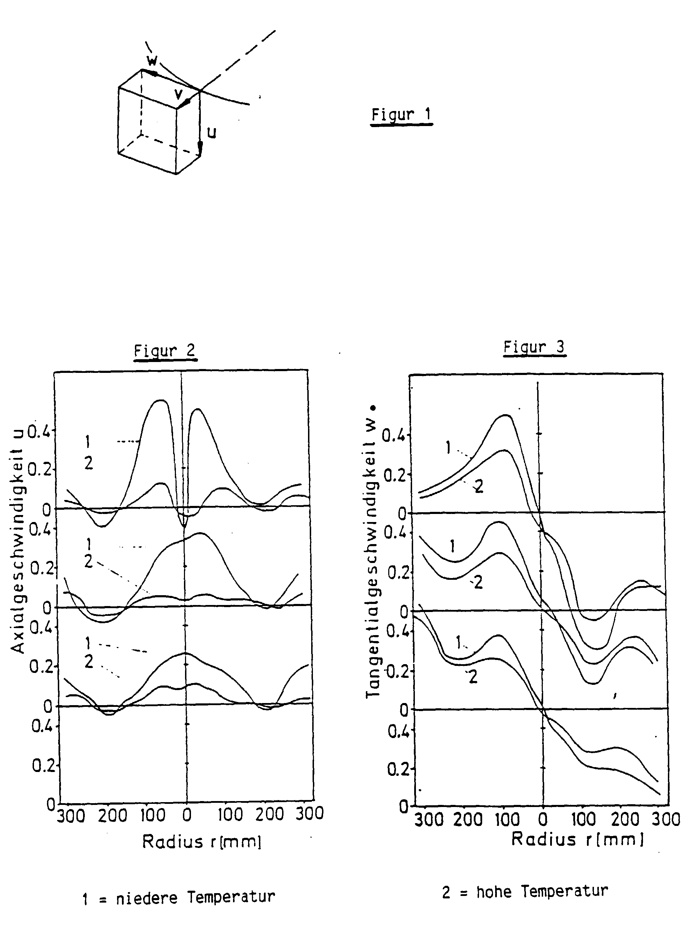

Zur Erläuterung der in der vorliegenden Erfindung beanspruchten, charakteristischen Strömung ist darauf hinzuweisen, daß diese nicht nur aus einer tangentialen Komponente w, einer zum Zyklonausgang wirkenden Komponente u und einer radialen Komponente v besteht, wie in Figur 1 dargestellt, sondern, daß in der Strömung ein Drall unter Wirbelausbildung mit bestimmter Drallstärke entsteht. Hierdurch entsteht eine innere Rezirkulation, die zu sogenanntem Wirbelaufplatzen der Strömung führt, d. h. es treten Strömungsablösungen bzw. Strömungsinstabilitäten auf, die zu hohen Turbulenzen im Reaktor führen.
Die Drallzahl S kann als

$$S = \frac{D}{I \cdot R}$$

definiert werden, wobei D der Drehimpulstrom, I der Axialimpulsstrom und R der Kammerradius ist. In Abhängigkeit von der Reaktortemperatur bilden sich über den Radius des Reaktors bestimmte Tangentialgeschwindigkeiten w und und bestimmte Axialgeschwindigkeiten u aus, wie in den **Figuren 2 und 3** dargestellt, die zu unterschiedlichen Drallstärken führen, wobei jeweils der mit 1 gekennzeichneten Kurve die höhere Temperatur und der mit 2 gekennzeichneten Kurve die niedrigere Temperatur zugrunde liegt.

Als Vergasungsmittel werden erfindungsgemäß bevorzugt Luft und Sauerstoff oder nur Sauerstoff oder Wasserdampf mit Luft und Sauerstoff oder Wasserdampf mit Sauerstoff eingesetzt.

Zusätzlich kann neben Luft bzw. Sauerstoff und Wasserdampf auch $CO_2$ eingesetzt werden. Dies kann in beliebigen Anteilen bis zum Einsatz von ausschließlich $CO_2$ erfolgen.

Der Reaktor kann als Zylinder ausgeführt sein, wobei sich die Wandungen von unten nach oben oder von oben nach unten verjüngen können oder auch über den gesamten Reaktor den gleichen Abstand besitzen können. Der Reaktor ist in üblicher Weise ausgemauert und im allgemeinen senkrecht stehend. Bevorzugt ist die zylindrische Form mit gleichem Durchmesser über die Reaktorhöhe.

Die Produkte können an verschiedenen Stellen entnommen werden, bevorzugt wird die Schlacke im unteren Bereich des Reaktors entnommen, wobei bevorzugt die Produkte als Pfropfenströmung aus dem Reaktor austreten, während das Rohgas bevorzugt aus dem oberen Bereich des Reaktors entnommen wird. Die Pfropfenströmung wird bekanntlich dadurch herbeigeführt, daß der Ausgang gegenüber den Reaktorwänden verjüngt ist. Grundsätzlich kann das Rohgas auch an anderer Stelle - etwa seitlich im oberen oder unteren Bereich - entnommen werden. Ebenso kann die Schlacke grundsätzlich seitlich im unteren Bereich abgezogen werden. Die Schlacke bildet erfindungsgemäß kein im Reaktor stehendes Schlackenbad, sondern strömt kontinuierlich aus dem Reaktor heraus.

Im allgemeinen strömt die Schlacke als Schmelze in ein Wasserbad, wo sie in kleine Partikel zerspringt. Ein Vorteil des erfindungsgemäßen Verfahrens besteht darin, daß die auf diese Weise gebildete Schlacke schwer bzw. nicht eluierbar ist und entweder auf einfachen Hausmülldeponien deponiert oder als ein wertvolles Material im Straßenbau eingesetzt werden kann.

Gegenüber der Verbrennung bietet die Vergasung den Vorteil, daß Emissionen wie Chlor enthaltende Dibenzodioxine und Dibenzofurane weder im Rohgas noch in der Schlacke nachweisbar sind oder in so geringer Menge anfallen, daß sie weit unter den gesetzlich zulässigen Werten liegen. Dies ist insbesondere beim Einsatz von Kohlenstoff enthaltenden Abfallmaterialien, die z. B. Chlor enthalten, von sehr großer Bedeutung. Eine typische Gesamtanlage zur erfindungsgemäßen Vergasung von Kohlenstoff enthaltenden Materialien kann aus folgenden Anlagenteilen bestehen mit dem Vergaser als zentrale Einheit, nämlich der mechanischen Vorbehandlung und Aufbereitung der Einsatzmaterialien, den Zuführungssystemen zur Einführung der Einsatzmaterialien in den Vergaser, den Brennersystemen, der thermischen Rohgasnachbehandlung, zusätzlich kann eine Heißgasentstaubung enthalten sein, der Rohgaskühlung, der Rohgasreinigung, also bekannten Gaswäschen und einer Konvertierung zur Einstellung des Verhältnisses von Kohlenmonoxyd zu Wasserstoff je nach Weiterverarbeitung des Synthesegases. Es sind jedoch auch andere Anlagenkombinationen mit dem erfindungsgemäßen Vergaser möglich, beispielsweise mit zusätzlichen Anlagenteilen oder ohne bestimmte Anlagenteile, wie z. B. ohne Heißgasentstaubung.

In dem erfindungsgemäßen Vergaser können alle Kohlenstoff enthaltenden Materialien, insbesondere auch alle Kohlenstoff enthaltenden Abfälle, vergast werden. Dies kann in fester, flüssiger, gasförmiger und pastöser oder schlammartiger Form erfolgen. Die Abfälle können sowohl synthetischen Ursprungs sein als auch natürlichen Ursprungs, wie beispielsweise vegetabilische Abfälle im Hausmüll oder Biomasse. Als synthetische organische Abfälle seien beispielhaft genannt: beliebige Kunststoffabfälle wie Thermoplaste und Duroplaste oder Harze, Öle, wie beispielsweise Altöle jeglicher Art, Elastomere, wie z. B. Reifengummi, Chemieabfallprodukte, wie beispielsweise solche aus der pharmazeutischen Industrie, Abfälle aus Krankenhäusern, Textilabfälle, Kabelabfälle, Shredderabfälle aus der Autoindustrie, sogenannte Spukstoffe, Klärschlamm und zahlreiche andere Abfälle. Die Abfälle können einzeln oder im Gemisch problemlos eingesetzt werden. Die Aufzählung der genannten Abfälle ist nicht als limitierend anzusehen.

Es ist dem Fachmann bekannt, daß, wie bereits im Zusammenhang mit dem Stand der Technik geschildert, alle Kohlenstoff enthaltenden Materialien vergast werden können, wie z. B. Kohlen, schwere Öle, gasförmige Materialien, wie Kohlenwasserstoffgase, Kohlenwasserstoffe im Siedebereich von Benzin, bzw. Naphtha, von Mittelöl bzw. Gasöl (Dieselöl und leichtes Heizöl), Schmieröl und folgende Komponenten:

Rohöl, Rohölkomponenten und Produkte aus Rohöl, Kohle einschließlich Braunkohle, Kohlekomponenten und Produkte aus Kohle, Ölschiefer, Ölschieferkomponenten und Produkte aus Ölschiefer, Ölsand, Ölsandkomponenten und Produkte aus Ölsand, Pyrolyseöle und Produkte aus Pyrolyseölen, Bitumen, Bitumenkomponenten und Produkte aus Bitumen, Asphalt und Asphaltene, Asphalt- und Asphaltenkomponenten und Produkte aus Asphalt und Asphaltenen, Anreiböle aus der Hydrierung von Abfällen und/oder thermischen Behandlung von Abfällen oder aus anderen Quellen, Teer, Teerkomponenten, Produkte aus Teer, Biomasse einschließlich Vegetabilien, Biomassekomponenten und Produkte aus Biomasse, Hausmüll, Hausmüllkomponenten und Produkte aus Hausmüll, Torf, Torfkomponenten und Produkte aus Torf.
Alle genannten Materialien einschließlich der Abfälle können einzeln oder in beliebigen Gemischen eingesetzt werden, wobei sich die Abfälle bzw. deren Gemisch erfindungsgemäß in besonders vorteilhafter Weise umsetzen lassen.

Die vorliegende Erfindung stellt einen entscheidenden Durchbruch in der Vergasung von Kohlenstoff enthaltenden Materialien, insbesondere von Abfällen zu einem wichtigen Rohstoff - nämlich Synthesegas - dar, wobei Emissionen wie Chlor enthaltende Dibenzodioxine und Dibenzofurane völlig oder nahezu völlig vermieden werden und wobei die Heteroatome in den Abfällen in Form von Wasserstoffverbindungen anfallen und nach üblichen Reinigungsmethoden aufgearbeitet werden können. Die erfindungsgemäße Technologie ersetzt daher nicht nur die Abfallverbrennung, sondern bietet auch gegenüber den bisherigen Vergasungsmethoden aufgrund ihrer speziellen kinetischen Verhältnisse im Reaktor, verbunden mit hoher Wirtschaftlichkeit, entscheidende Vorteile.

Obgleich Vergasungen bekanntlich ohne Zusatz von Katalysatoren oder sonstigen Hilfsmittel durchgeführt werden, können im Falle der vorliegenden Erfindung auch solche Zusätze eingesetzt werden.

**Patentansprüche**

1. Verfahren zum Vergasen von kohlenstoffhaltigen Materialien, wobei die kohlenstoffhaltigen Materialien mit einem Unterschuß an Luft und/oder Sauerstoff oder mit Wasserdampf sowie einem Unterschuß an Luft und/oder Sauerstoff bei einer Temperatur von 1000 bis 1800 °C und einem Druck von 1 bis 60 bar in einem Vergasungsreaktor, in dem eine für einen Zyklon charakteristische Drallströmung ausgebildet ist, zu einem Produktgas und einer im unteren Bereich des Vergasungsreaktors austretenden schmelzflüssigen Schlacke umgesetzt werden, **dadurch gekennzeichnet**, daß beim Zuführen von kohlenstoffhaltigen Abfällen zum Vergasungsreaktor in diesem eine hochturbulente Drallströmung mit innerer Rezirkulation ausgebildet wird.

2. Verfahren nach Anspruch 1, dadurch gekennzeichnet, daß die kohlenstoffhaltigen Abfälle bei einer Temperatur von 1200 bis 1700 °C umgesetzt werden.

3. Verfahren nach Anspruch 1 oder 2, dadurch gekennzeichnet, daß die kohlenstoffhaltigen Abfälle bei einem Druck von 1 bis 40 bar, insbesondere 1 bis 10 bar umgesetzt werden.

4. Verwendung eines senkrecht stehenden, zylindrischen Zyklonreaktors bei einem Verfahren nach einem der Ansprüche 1 bis 3.

5. Verwendung nach Anspruch 4, wobei das Produktgas seitlich im unteren Bereich des Zyklonreaktors entnommen wird.

**Claims**

1. A process for the gasification of carbon-containing materials, wherein the carbon-containing materials are reacted a with a deficit of air and/or oxygen, or with steam and with a deficit of air and/or oxygen, at a temperature of 1000 to 1800°C and at a pressure of 1 to 60 bar in a gasification reactor in which a swirling flow is produced which is characteristic of a cyclone, to form a product gas and a molten slag which emerges in the lower region of the gasification reactor, characterised in that when carbon-containing waste materials are fed to the gasification reactor a highly turbulent swirling flow with internal recirculation is produced therein.

2. A process according to claim 1, characterised in that the carbon-containing waste materials are reacted at a temperature of 1200 to 1700°C.

3. A process according to claim 1, characterised in that the carbon-containing waste materials are reacted at a pressure of 1 to 40 bar, particularly 1 to 10 bar.

4. The use of a vertical, cylindrical cyclone reactor in a process according to any one of claims 1 to 3.

5. A use according to claim 4, wherein the product gas is taken off at the side in the lower region of the cyclone reactor.

## Revendications

1. Procédé de gazéification de matériaux contenant du carbone, les matériaux contenant du carbone étant transformés en un gaz-produit et en une scorie en fusion, sortant à la partie inférieure du réacteur de gazéification, avec un déficit d'air ou d'oxygène ou avec de la vapeur d'eau ainsi qu'avec un déficit d'air et/ou d'oxygène à une température de 1 000 à 1 800 °C et sous une pression de 1 à 60 bars, dans un réacteur de gazéification, dans lequel est formé un écoulement en rotation caractéristique pour un cyclone, caractérisé en ce que lors de l'amenée de déchets contenant du carbone vers le réacteur de gazéification, il se produit dans celui-ci un écoulement en rotation fortement turbulent avec recirculation interne.

2. Procédé selon la revendication 1, caractérisé en ce que les déchets contenant du carbone sont transformés à une température de 1 200 à 1 700 °C.

3. Procédé selon la revendication 1 ou 2, caractérisé en ce que les déchets contenant du carbone sont transformés sous une pression de 1 à 40 bars, en particulier de 1 à 10 bars.

4. Utilisation d'un réacteur cyclone cylindrique vertical lors d'un procédé suivant l'une des revendications 1 à 3.

5. Utilisation selon la revendication 4, le gaz-produit étant prélevé latéralement dans la partie inférieure du réacteur cyclone.

Figur 1

Figur 2

Axialgeschwindigkeit u

Radius r[mm]

Figur 3

Tangentialgeschwindigkeit w

Radius r[mm]

1 = niedere Temperatur

2 = hohe Temperatur